(19) **Europäisches Patentamt European Patent Office Office européen des brevets**

(11) **EP 1 488 170 B1**

(12) **EUROPEAN PATENT SPECIFICATION**

(45) Date of publication and mention
of the grant of the patent:
**05.09.2012 Bulletin 2012/36**

(51) Int Cl.:
**F23D 14/08** (2006.01)

(21) Application number: **03723747.6**

(86) International application number:
**PCT/US2003/007955**

(22) Date of filing: **14.03.2003**

(87) International publication number:
**WO 2003/081134 (02.10.2003 Gazette 2003/40)**

(54) **BURNER EMPLOYING IMPROVED FGR DUCT DESIGN**

BRENNER MIT VERBESSERTEM ABGASRÜCKFÜHRUNGSKANAL

BRULEUR UTILISANT UNE CONCEPTION AMELIOREE DU CONDUIT DE RECIRCULATION DE FUMEES

(84) Designated Contracting States:
**AT BE BG CH CY CZ DE DK EE ES FI FR GB GR HU IE IT LI LU MC NL PT RO SE SI SK TR**

(30) Priority: **16.03.2002 US 365150 P
16.03.2002 US 365146 P
16.03.2002 US 365139 P**

(43) Date of publication of application:
**22.12.2004 Bulletin 2004/52**

(73) Proprietor: **ExxonMobil Chemical Patents Inc.
Baytown, TX 77520-5200 (US)**

(72) Inventors:
• **STEPHENS, George
Humble, TX 77346 (US)**
• **SPICER, David, B.
Houston, TX 77056 (US)**

(74) Representative: **Dew, Melvyn John
ExxonMobil Chemical Europe Inc.
Intellectual Property Law Shared Services
P.O. Box 105
1830 Machelen (BE)**

(56) References cited:
**EP-A- 0 374 423     US-A- 4 130 388
US-A- 5 092 761     US-A- 5 624 253**

**Description**

This invention relates to an improvement in a burner such as those employed in high temperature furnaces in the steam cracking of hydrocarbons. More particularly, it relates to the use of an FGR burner of novel configuration to reduce the temperature of recirculated flue gas and to lower $NO_x$ emissions.

Because of the interest in recent years to reduce the emission of pollutants from burners used in large furnaces and boilers, burner design has undergone substantial change. In the past, improvements in burner design were aimed primarily at improving heat distribution. Increasingly stringent environmental regulations have shifted the focus of burner design to the minimization of regulated pollutants.

Oxides of nitrogen ($NO_x$) are formed in air at high temperatures. These compounds include, but are not limited to, nitrogen oxide and nitrogen dioxide. Reduction of $NO_x$ emissions is a desired goal to decrease air pollution and meet government regulations. In recent years, a wide variety of mobile and stationary sources of $NO_x$ emissions have come under increased scrutiny and regulation.

One strategy for achieving lower $NO_x$ emission levels is to install a $NO_x$ reduction catalyst to treat the furnace exhaust stream. This strategy, known as Selective Catalytic Reduction (SCR), is very costly and, although it can be effective in meeting more stringent regulations, it represents a less desirable alternative to improvements in burner design.

Burners used in large industrial furnaces may use either liquid or gaseous fuel. Liquid fuel burners mix the fuel with steam prior to combustion to atomize the fuel to enable more complete combustion, and mix combustion air with the fuel at the zone of combustion.

Gas fired burners can be classified as either premix or raw gas, depending on the method used to combine the air and fuel. They also differ in configuration and the type of burner tip used.

Raw gas burners inject fuel directly into the air stream, such that the mixing of fuel and air occurs simultaneously with combustion. Since airflow does not change appreciably with fuel flow, the air register settings of natural draft burners must be changed after firing rate changes. Therefore, frequent adjustment may be necessary, as explained in detail in U.S. Patent No. 4,257,763. In addition, many raw gas burners produce luminous flames.

Premix burners mix some or all of the fuel with some or all of the combustion air prior to combustion. Since premixing is accomplished by using the energy present in the fuel stream, airflow is largely proportional to fuel flow. As a result, therefore, less frequent adjustment is required. Premixing the fuel and air also facilitates the achievement of the desired flame characteristics. Due to these properties, premix burners are often compatible with various steam cracking furnace configurations.

Floor-fired premix burners are used in many steam crackers and steam reformers primarily because of their ability to produce a relatively uniform heat distribution profile in the tall radiant sections of these furnaces. Flames are non-luminous, permitting tube metal temperatures to be readily monitored. Therefore, a premix burner is the burner of choice for such furnaces. Premix burners can also be designed for special heat distribution profiles or flame shapes required in other types of furnaces.

In gas fired industrial furnaces, $NO_x$ is formed by the oxidation of nitrogen drawn into the burner with the combustion air stream. The formation of $NO_x$ is widely believed to occur primarily in regions of the flame where there exist both high temperatures and an abundance of oxygen. Since ethylene furnaces are amongst the highest temperature furnaces used in the hydrocarbon processing industry, the natural tendency of burners in these furnaces is to produce high levels of $NO_x$ emissions.

One technique for reducing $NO_x$ that has become widely accepted in industry is known as combustion staging. With combustion staging, the primary flame zone is deficient in either air (fuel rich) or fuel (fuel lean). The balance of the air or fuel is injected into the burner in a secondary flame zone or elsewhere in the combustion chamber. As is well known, a fuel-rich or fuel-lean combustion zone is less conducive to $NO_x$ formation than an air-fuel ration closer to stoichiometry. Combustion staging results in reducing peak temperatures in the primary flame zone and has been found to alter combustion speed in a way that reduces $NO_x$. Since $NO_x$ formation is exponentially dependent on gas temperature, even small reductions in peak flame temperature dramatically reduce $NO_x$ emissions. However this must be balanced with the fact that radiant heat transfer decreases with reduced flame temperature, while CO emissions, an indication of incomplete combustion, may actually increase as well.

In the context of premix burners, the term primary air refers to the air premixed with the fuel; secondary, and in some cases tertiary, air refers to the balance of the air required for proper combustion. In raw gas burners, primary air is the air that is more closely associated with the fuel; secondary and tertiary air are more remotely associated with the fuel. The upper limit of flammability refers to the mixture containing the maximum fuel concentration (fuel-rich) through which a flame can propagate.

Thus, one set of techniques achieves lower flame temperatures by using staged-air or staged-fuel burners to lower flame temperatures by carrying out the initial combustion at far from stoichiometric conditions (either fuel-rich or air-rich) and adding the remaining air or fuel only after the flame has radiated some heat away to the fluid being heated in the furnace.

Another technique for achieving lower flame temperatures involves diluting the fuel-air mixture with inert material. Flue-gas (the products of the combustion reaction) or steam are commonly used diluents. Such burners are classified as FGR (flue-gas-recirculation) or steam-injected, respectively.

U.S. Patent No. 5,092,761 discloses a method and apparatus for reducing $NO_x$ emissions from premix burners by recirculating flue gas. Flue gas is drawn from the furnace through a pipe or pipes by the inspirating effect of fuel gas and combustion air passing through a venturi portion of a burner tube. The flue gas mixes with combustion air in a primary air chamber prior to combustion to dilute the concentration of $O_2$ in the combustion air, which lowers flame temperature and thereby reduces $NO_x$ emissions. The flue gas recirculating system may be retrofitted into existing premix burners or may be incorporated in new low $NO_x$ burners.

Analysis of burners of the type described in U.S. Patent No. 5,092,761 has indicated the flue-gas-recirculation (FGR) ratio is generally in the range 5-10% where FGR ratio is defined as:

$$\text{FGR ratio (\%) = 100}[G/(F+A)]$$

where

G = Flue-gas drawn into venturi, (lb)
F = Fuel combusted in burner, (lb), and
A = Air drawn into burner, (lb).

The ability of these burners to generate higher FGR ratios is limited by the inspirating capacity of the fuel orifice/gas spud/venturi combination. Although closing or partial closing of the primary air dampers can further reduce the pressure in the primary air chamber and thereby enable increased FGR ratios, the resultant reduction of primary air flow is such that insufficient oxygen is present in the venturi for acceptable burner stability.

Commercial experience and modeling have shown when flue gas recirculation rates are raised, there is a tendency of the flame to be drawn into the FGR duct. Often, it is this phenomenon that constrains the amount of flue gas recirculation. When the flame enters directly into the flue gas recirculation duct, the temperature of the burner venturi tends to rise, which raises flame speed and causes the recirculated flue gas to be less effective in reducing $NO_x$. From an operability perspective, the flue gas recirculation rate needs to be lowered to keep the flame out of the FGR duct to preserve the life of the metallic FGR duct.

A drawback of the system of U.S. Patent No. 5,092,761 is that the staged-air used to cool the FGR duct must first enter the furnace firebox, traverse a short distance across the floor and then enter the FGR duct. During this passage, the staged-air is exposed to radiation from the hot flue-gas in the firebox. Analyses of experimental data from burner tests suggest that the staged-air may be as hot as 371°C (700°F) when it enters the FGR duct. Further, the flue gas and/or recirculation into the FGR duct can be as hot as 1149°C (2100°F). U.S. Patent No. 4,130,388 describes in one embodiment a fuel burner in which hot combustion gas from a combustion zone and combustion air are mixed and sucked into the throat section of a venturi in the burner.

Despite these advances in the art, a need exists for a burner having a desirable heat distribution profile that meets increasingly stringent $NO_x$ emission regulations and results in acceptable FGR duct temperatures.

Therefore, what is needed is a burner for the combustion of fuel wherein the temperature of the recirculated flue gas and the resultant fuel/air/flue-gas mixture is advantageously reduced and/or enables higher flue gas recirculation (FGR) ratios to be utilized in order to meet stringent emissions regulations. This would thus reduce the flame temperature and flame speed thereby resulting in a reduction of $NO_x$ formation. The required burner will provide extended FGR pipe life as a result of the lower temperature of the recirculated gas.

The present invention is directed to a burner for reducing the temperature of the recirculated/flue gas in a flue gas recirculation duct for use in burners of furnaces such as those used in steam cracking. The burner comprises:

(a) a primary air chamber;
(b) a burner tube having a downstream end, and having an upstream end for receiving air and fuel;
(c) a burner tip being mounted on the downstream end of said burner tube adjacent to a first flame opening in the furnace, so that combustion of the fuel takes place downstream of said burner tip;
(d) at least one passageway having a first end at a second opening in the furnace and a second end adjacent the upstream end of said burner tube, said passageway having an orifice, said first end being spaced an effective distance from said first opening for minimizing entrainment of a burner flame into said second opening;
(e) at least one bleed air duct having a first end and a second end, said first end in fluid communication with said orifice of said at least one passageway and said second end in fluid communication with a source of air which is cooler than the flue gas; and

(f) means for drawing flue gas from said furnace through said at least one passageway and air from said source of air from said at least one bleed air duct through said at least one passageway in response to an inspirating effect created by uncombusted fuel, flowing through said burner tube from its upstream end towards its downstream end, whereby the flue gas is mixed with air from said at least one air bleed duct prior to the zone of combustion of the fuel and air to thereby lower the temperature of the drawn flue gas.

The invention is further explained in the description that follows with reference to the drawings illustrating, by way of non-limiting examples, various embodiments of the invention wherein:

FIG. 1 illustrates an elevation partly in section of an embodiment of the burner of the present invention;
FIG. 2 is an elevation partly in section taken along line 2-2 of FIG. 1;
FIG. 3 is a plan view taken along line 3-3 of FIG. 1;
FIG. 4 is a plan view taken along line 4-4 of FIG. 1;
FIG. 5 is another embodiment of the burner of the present invention;
FIG. 6 is a plan view taken along line 6-6 of FIG. 7;
FIG. 7 is an elevation partly in section of another embodiment of the burner of the present invention;
FIG. 8 is an elevation partly in section taken along line 8--8 of FIG. 7;
FIG. 9 illustrates an elevation partly in section of an embodiment of a flat-flame burner of the present invention;
FIG. 10 is an elevation partly in section of the embodiment of a flat-flame burner of FIG. 9 taken along line 10-10 of FIG. 9.
FIG. 11 illustrates an elevation partly in section of another embodiment of the burner in accordance with the present invention;
FIG. 12 is an elevation partly in section taken along line 12-12 of FIG. 11;
FIG. 13A is a plan view taken along line 13-13 of FIG. 11;
FIG. 13B illustrates an alternate embodiment of the present invention employing a curved wall as opposed to the straight wall in FIG. 13A;
FIG. 14 illustrates an elevation partly in section of another embodiment of a flat-flame burner of the present invention; and
FIG. 15 is an elevation partly in section of the embodiment of a flat-flame burner of FIG. 14 taken along line 15-15 of FIG. 14.

DETAILED DESCRIPTION OF THE PREFERRED EMBODIMENTS

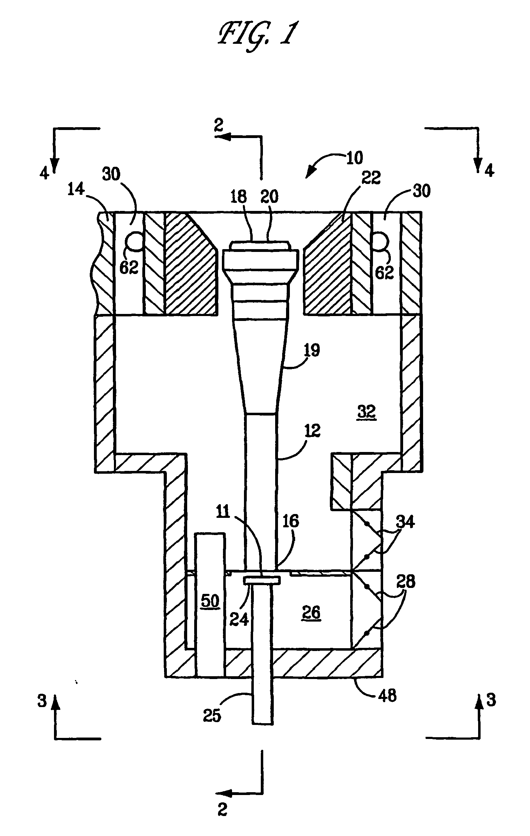

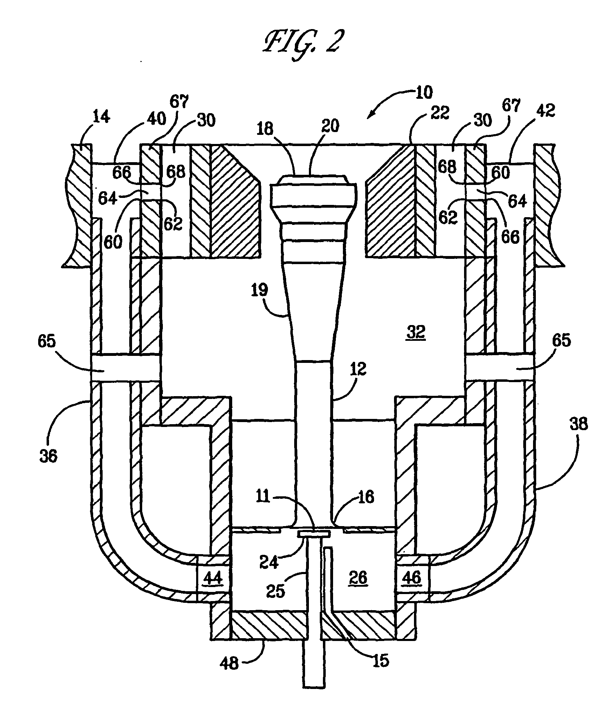

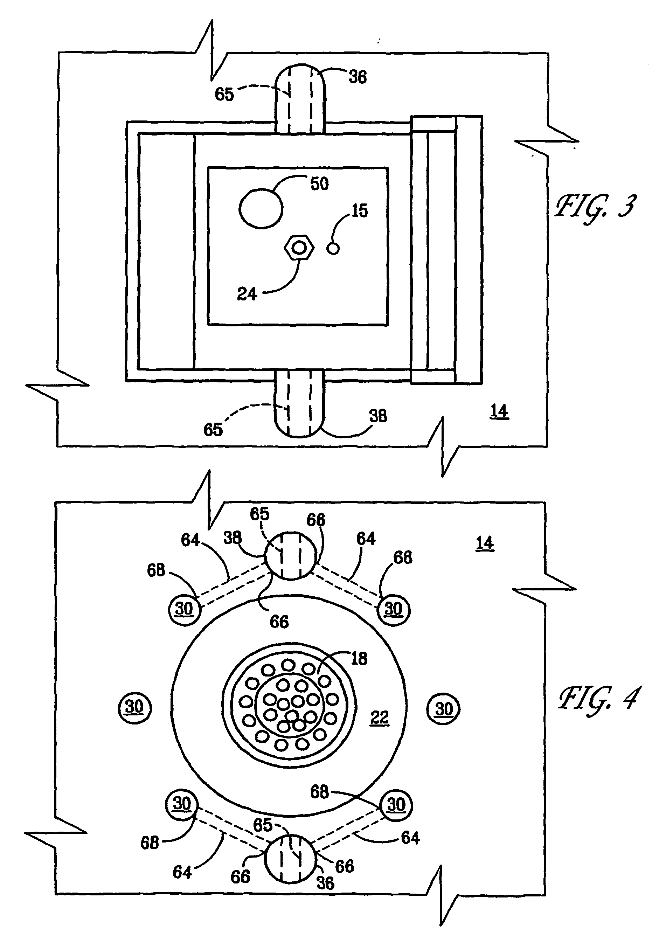

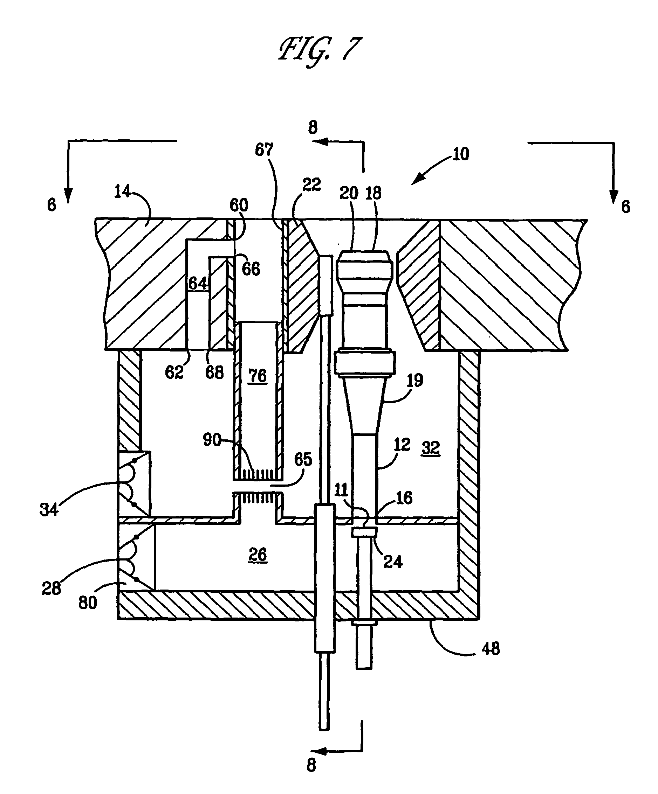

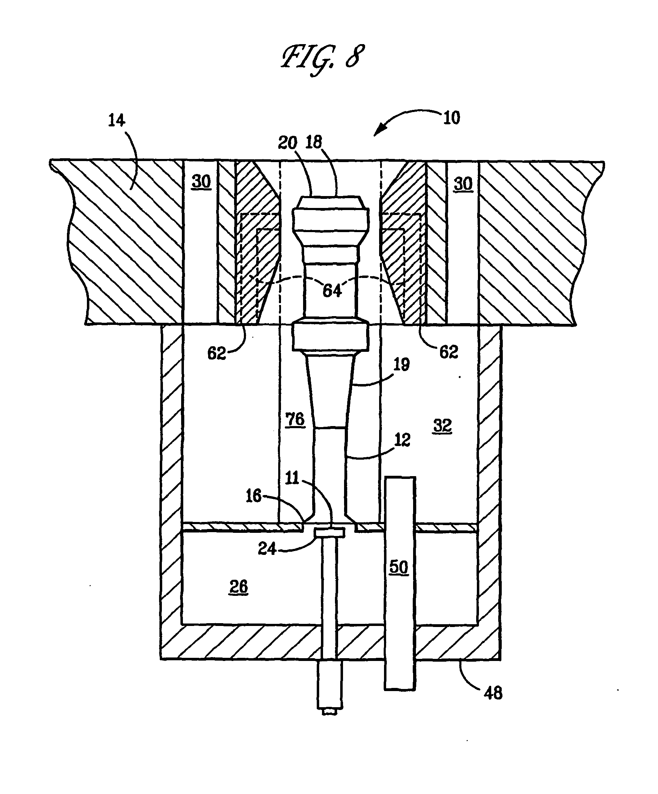

Although the present invention is described in terms of a burner for use in connection with a furnace or an industrial furnace, it will be apparent to one of skill in the art that the teachings of the present invention also have applicability to other process components such as, for example, boilers. Thus, the term furnace herein shall be understood to mean furnaces, boilers and other applicable process components.
Reference is now made to the embodiments illustrated in FIGS. 1-15 wherein like numerals are used to designate like parts throughout.
Referring now to FIGS. 1-4, a burner 10 includes a freestanding burner tube 12 located in a well in a furnace floor 14. Burner tube 12 includes an upstream end 16, a downstream end 18 and a venturi 19. Burner tip 20 is located at the downstream end 18 of tube 12 and is surrounded by an annular tile 22. A fuel orifice 11, which may be located within a gas spud 24 is at the top end of a gas fuel riser 25 and is located at the upstream end 16 of burner tube 12 and introduces fuel into burner tube 12. Fresh or ambient air is introduced into primary air chamber 26 through adjustable damper 28 to mix with the fuel at upstream end 16 of burner tube 12 and pass upwardly through the venturi portion 19. Combustion of the fuel occurs downstream of the burner tip 20. As may be appreciated, a motive force is provided by the flow of fuel into venturi portion 19, inducing the flow of flue gas recirculation, air and optionally steam into the burner tube 12. Optionally, one or more steam injection tubes 15 may be provided so as to be positioned in the direction of flow so as to add to the motive force.
A plurality of air ports 30 originate in secondary air chamber 32 and pass through furnace floor 14 into the furnace. Fresh air enters secondary air chamber 32 through adjustable dampers 34 and passes through staged air ports 30 into the furnace to provide secondary or staged combustion.
In order to recirculate flue gas from the furnace to the primary air chamber 26, ducts or recirculation pipes 36 and 38 extend from openings 40, 42, respectively, in the floor of the furnace to openings 44, 46, respectively, in burner plenum 48. Recirculation pipes 36 and 38 are preferably formed from metal and are inserted in openings 40 and 42 to extend only partially therethrough and not directly meet with the interior surface of the furnace as shown in FIG. 2. This configuration avoids contact with and radiation from the very high gas temperatures gas at openings 40 and 42.

Flue gas containing, for example, 0 to 15% $O_2$ is drawn through pipes 36, 38, with 5 to 15% $O_2$ preferred, 2 to 10% $O_2$ more preferred and 2 to 5% $O_2$ particularly preferred, by the inspirating effect of fuel gas passing through venturi portion 19 of burner tube 12. In this manner, air and flue gas are mixed in primary air chamber 26, which is prior to the zone of combustion. Therefore, the inert material mixed with the fuel reduces the flame temperature and, as a result, reduces $NO_x$ emissions.

Closing or partially closing damper 28 restricts the amount of fresh air that can be drawn into the primary air chamber 26 and thereby provides the vacuum necessary to draw flue gas from the furnace floor.

Unmixed low temperature ambient air, having entered secondary air chamber 32 through dampers 34 is drawn from air port 30 through orifice 62, through bleed air duct 64, through orifice 60 into pipes 36, 38 into the primary air chamber 26 by the inspirating effect of the fuel passing through venturi portion 19. The ambient air may be fresh air as discussed above. The mixing of the staged or secondary air with the flue gas lowers the temperature of the hot flue gas flowing through recirculation pipes 36 and 38 and thereby substantially increases the life of the recirculation pipes 36 and 38 and allows use of this type of burner to reduce $NO_x$ emissions in high temperature cracking furnaces having flue gas temperature above 1040 °C (1900 °F) in the radiant section of the furnace. Bleed air duct 64 has a first end 66 and a second end 68, first end 66 connected to orifice 60 of recirculation pipes 36 or 38 and second end 68 connected to orifice 62 of air port 30.

In this embodiment, furnace floor 14, comprised of a high temperature, low thermal conductivity material, which may, for example, be selected from ceramics, ceramic fibers or castable refractory materials, includes a wall portion 67 having an air bleed duct 64 formed through the wall portion 67 of the furnace floor 14. In this configuration, the temperature of the recirculation pipes 36 and 38 is minimized.

An additional amount of unmixed low temperature ambient air, having passed through air ports 30 into the furnace, may also be drawn through recirculation pipes 36 and 38 into the primary air chamber 26 by the inspirating effect of the fuel passing through venturi portion 19. To the extent that damper 28 is completely closed, bleed air duct 64 should be sized to permit the necessary flow for the full requirement of primary air needed by burner 10.

It is preferred that a mixture of from 20% to 80% flue gas and from 20% to 80% ambient air should be drawn through recirculation pipes 36 and 38. It is particularly preferred that a mixture of 50% flue gas and 50% ambient air be employed.

A sight and lighting port 50 is provided in the primary air chamber 26, extending into secondary air chamber 32, both to allow inspection of the interior of the burner assembly, and to provide access for lighting of the burner.

An additional feature of the present invention involves the use of FGR heat exchange tubes 65. This aspect of the present invention may be employed with or without the teachings described above with respect to the bleed air duct 64. With respect to the use of heat exchange tubes 65, low temperature ambient air is drawn through one or more staged air FGR heat exchange tubes 65, disposed in each of the recirculation pipes 36 and 38 into the secondary air chamber 32 by the draft in the furnace. The heat exchange tubes 65 are preferably round in cross section but other shapes have utility in the practice of the present invention. The ambient air may be fresh air as discussed above. Heat is transferred from the recirculated flue gas passing though the ducts or recirculation pipes 36 and 38 to the low temperature ambient air as it flows through the FGR heat exchange tubes 65. This lowers the temperature of the hot flue gas flowing through recirculation pipes 36 and 38 which allows this type burner to reduce $NO_x$ emission as previously described especially in high temperature cracking furnaces having flue gas temperature above 1040 °C (1900 °F) in the radiant section of the furnace.

Furthermore, this transfer of heat directly into the air entering the secondary air chamber 32 will raise the temperature of the staged air so that there is no reduction in thermal efficiency of the burner 10 compared, for example, to transferring the heat from the recirculated flue gas to the outside air.

The lower temperature in the recirculation pipes 36 and 38 and venturi 19 resulting from the cooling of the recirculated flue gas will raise the density of the gas mixture and raise the FGR entrainment capacity of the venturi 19. A higher capacity venturi will in turn beneficially raise the inspiration rate of the recirculated flue gas. The increased inspiration of recirculated flue gas decreases the oxygen content of the fuel air mixture and increases the heat capacity, both of which will help reduce the flame temperature, and reduce $NO_x$ formation even further.

The majority of the low temperature ambient air enters the secondary air chamber 32 through dampers 34. The ambient air may be fresh air.

Based upon, for example, a 10% FGR case with a mixture of 50% flue gas and 50% ambient air passing through the flue gas recirculation passageway, the maximum theoretical temperature reduction in the recirculated flue gas is as follows:

| % of total combustion air flowing through FGR heat exchange tubes | Maximum temperature Reduction of recirculated Flue gas, °C |
| --- | --- |
| 1.7 | 25 (77°F) |

(continued)

| % of total combustion air flowing through FGR heat exchange tubes | Maximum temperature Reduction of recirculated Flue gas, °C |
|---|---|
| 8.3 | 110 (230°F) |
| 16.0 | 225 (437°F) |
| 100.0 | 482 (900°F) |

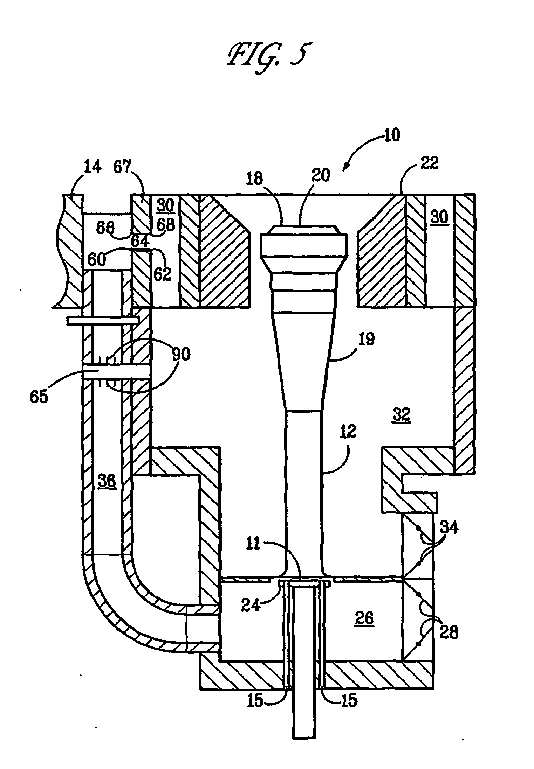

An alternate embodiment to the burner of FIGS. 1-4 is shown in FIG. 5, wherein like reference numbers indicate like parts. As may be seen, the main difference between the embodiment of FIGS. 1-4, and that of FIG. 5, is that the latter employs only a single recirculation pipe 36. In this embodiment, for example, a single 6-inch diameter pipe is used to replace two 4-inch diameter pipes. Once again, the desired proportions of flue gas and ambient air may be achieved by the proper sizing, placement and/or design of recirculation pipe 36, bleed air duct 64, air ports 30 and FGR heat exchange tubes 65. In this embodiment, furnace floor 14, comprised of a high temperature, low thermal conductivity material, which may, for example, be selected from ceramics, ceramic fibers or castable refractory materials, includes a wall portion 67 having an air bleed duct 64 formed through the wall portion 67 of the furnace floor 14. In this configuration, the temperature of the recirculation pipe 36 is minimized.

Low temperature ambient air enters the secondary air chamber 32 through dampers 34. Again, the ambient air may be fresh air as discussed above. One or more FGR heat exchange tubes 65 may be provided in the recirculation pipe 36, which allow the low temperature ambient air to exchange heat with the recirculated flue gas. Advantageously, FGR heat exchange tubes 65 may be provided with a plurality of fins 90 positioned about an outer surface thereof for contacting flue gas flowing through the recirculation pipe 36. Again, the teachings of the present invention with respect to heat exchange tubes 65 and bleed air duct 64 may be applied separately or in combination with this embodiment.

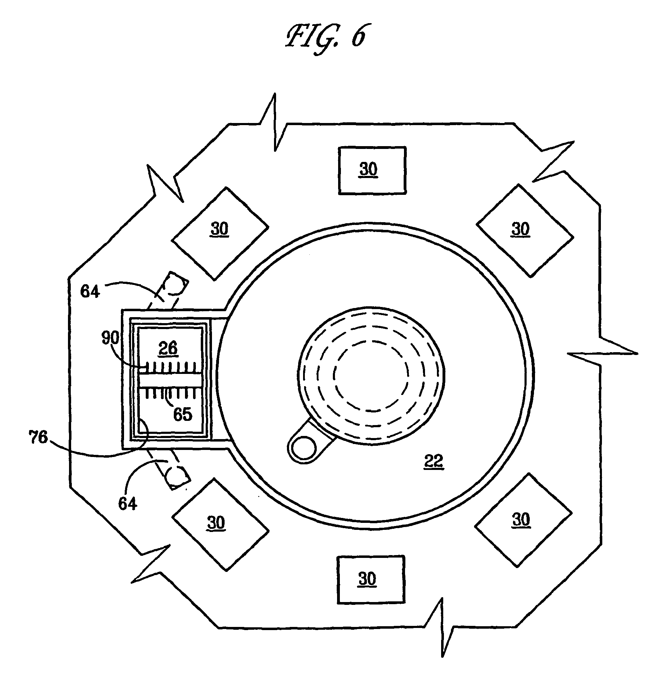

The improved flue gas recycling system of the present invention may also be used in a low $NO_x$ burner design of the type illustrated in FIGS. 6, 7 and 8, wherein like reference numbers indicate like parts. As with the embodiment of FIGS. 1-4, a burner 10 includes a freestanding burner tube 12 located in a well in a furnace floor 14. Burner tube 12 includes an upstream end 16, a downstream end 18 and a venturi portion 19. Burner tip 20 is located at downstream end 18 and is surrounded by an annular tile 22. Fuel orifice 11, which may be located within gas spud 24, is located at upstream end 16 and introduces fuel into burner tube 12. Fresh or ambient air is introduced into primary air chamber 26 through adjustable damper 28 to mix with the fuel at upstream end 16 of burner tube 12. Combustion of the fuel and fresh air occurs downstream of burner tip 20.

A plurality of air ports 30 originate in secondary air chamber 32 and pass through furnace floor 14 into the furnace. Fresh air enters secondary air chamber 32 through adjustable dampers 34 and passes through staged air ports 30 into the furnace to provide secondary or staged combustion.

In order to recirculate flue gas from the furnace to the primary air chamber 26, a flue gas recirculation passageway 76 is formed in furnace floor 14 and extends to primary air chamber 26, so that flue gas is mixed with fresh air drawn into the primary air chamber 26 from opening 80. Flue gas containing, for example, 0 to 15% $O_2$ is drawn through passageway 76 with 5 to 15% $O_2$ preferred, 2 to 10% $O_2$ more preferred and 2 to 5% $O_2$ particularly preferred by the inspirating effect of fuel passing through venturi portion 19 of burner tube 12. As with the embodiment of FIGS. 1-4, the primary air and flue gas are mixed in primary air chamber 26, which is prior to the zone of combustion. Closing or partially closing damper 28 restricts the amount of fresh air that can be drawn into the primary air chamber 26 and thereby provides the vacuum necessary to draw flue gas from the furnace floor.

Unmixed low temperature ambient air, having entered secondary air chamber 32 through dampers 34 is drawn from secondary air chamber 32 through orifice 62, through bleed air duct 64, through orifice 60 into flue gas recirculation passageway 76 into the primary air chamber 26 by the inspirating effect of the fuel passing through venturi portion 19. Again, the ambient air may be fresh air as discussed above. Bleed air duct 64 has a first end 66 and a second end 68, first end 66 connected to orifice 60 of flue gas recirculation passageway 76 and second end 68 connected to orifice 62 and in fluid communication with secondary air chamber 32. As with the embodiment of FIG. 5, furnace floor 14 comprises a high temperature, low thermal conductivity material and includes an air bleed duct 64 formed through furnace floor 14 to minimize the temperature of the flue gas recirculation passageway 76.

An additional amount of unmixed low temperature ambient air having passed through air ports 30 into the furnace, may also be drawn through flue gas recirculation passageway 76 into the primary air chamber 26 by the inspirating effect of the fuel passing through venturi portion 19.

Low temperature ambient air enters the secondary air chamber 32 through dampers 34 being drawn from air ports 30. Again, the ambient air may be fresh air as discussed above. One or more stage air heat exchange tubes 65 may be provided in the flue gas recirculation passageway 76 which allow the low temperature ambient air to exchange heat with the recirculated flue gas. Again, the teachings of the present invention with respect to heat exchange tubes 65 and bleed air duct 64 may be applied separately or in combination with this embodiment. Heat exchange tubes 65 may be provided with a plurality of fins 90 positioned about an outer surface thereof.

As with the embodiment of FIGS. 1-4 and 5, a mixture of 20 to 80% flue gas and from 20 to 80% ambient air is drawn through flue gas recirculation passageway 76. It is particularly preferred that a mixture of 50% flue gas and 50% ambient air be employed.

Sight and lighting port 50 provides access to the interior of burner plenum 48 for lighting element (not shown). It is noted that a similar lighting element may also be used in the embodiments of FIGS. 1-5.

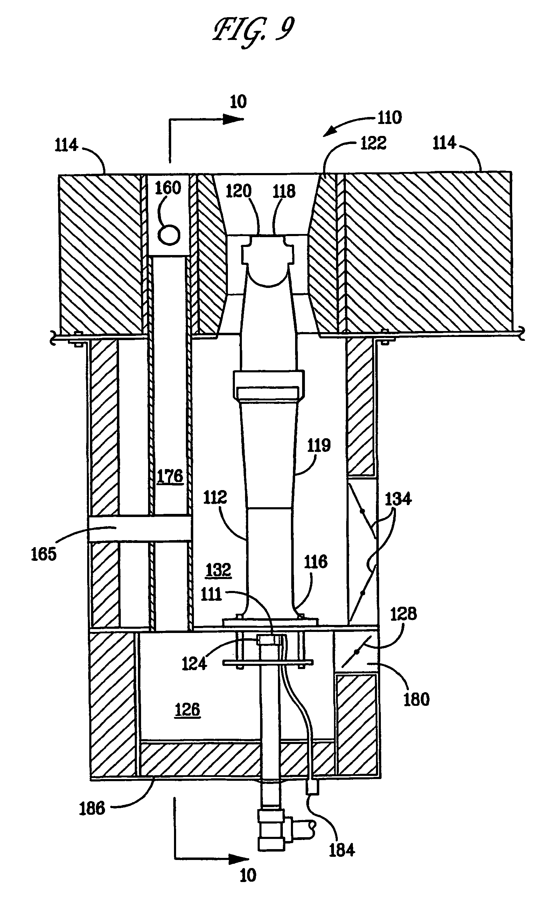

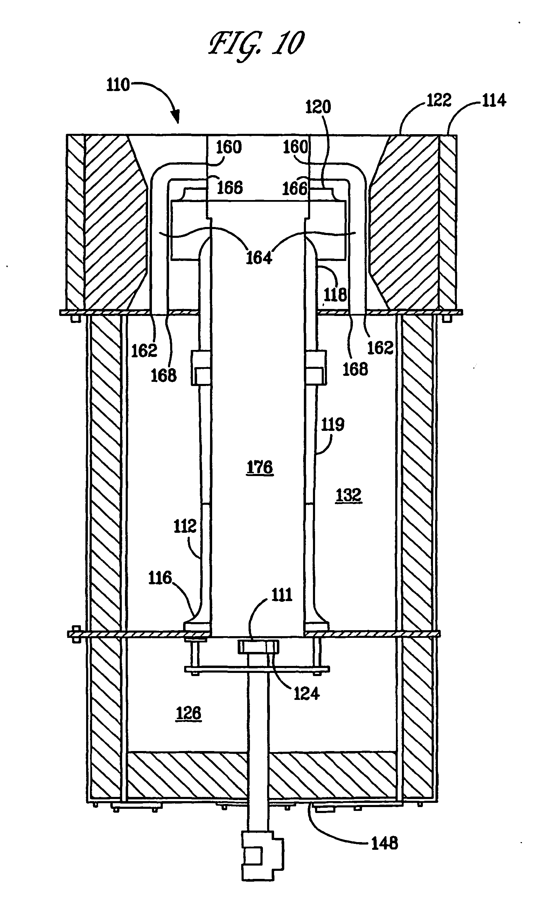

A similar benefit can be achieved in flat-flame burners, as will now be described by reference to FIGS. 9 and 10. A burner 110 includes a freestanding burner tube 112 located in a well in a furnace floor 114. Burner tube 112 includes an upstream end 116, a downstream end 118 and a venturi portion 119. Burner tip 120 is located at downstream end 118 and is surrounded by a peripheral tile 122. Fuel orifice 111, which may be located within gas spud 124, is located at upstream end 116 and introduces fuel into burner tube 112. Fresh or ambient air is introduced into primary air chamber 126 to mix with the fuel at upstream end 116 of burner tube 112. Combustion of the fuel occurs downstream of burner tip 120. Fresh secondary air enters secondary chamber 132 through dampers 134.

In order to recirculate flue gas from the furnace to the primary air chamber, a flue gas recirculation passageway 176 is formed in furnace floor 114 and extends to primary air chamber 126, so that flue gas is mixed with fresh air drawn into the primary air chamber from opening 180 through dampers 128. Flue gas containing, for example, 0 to 15% $O_2$ is drawn through passageway 176 by the inspirating effect of fuel passing through venturi portion 119 of burner tube 112. Primary air and flue gas are mixed in primary air chamber 126, which is prior to the zone of combustion. Optionally, one or more steam injection tubes 184 may be provided and positioned in the direction of flow.

In operation, fuel orifice 111, which may be located in gas spud 124 discharges fuel into burner tube 112, where it mixes with primary air, recirculated flue-gas or mixtures thereof. The mixture of fuel and recirculated flue-gas, primary air or mixtures thereof then discharges from burner tip 120. The mixture in the venturi portion 119 of burner tube 112 is maintained below the fuel-rich flammability limit; i.e. there is insufficient air in the venturi to support combustion. Secondary air is added to provide the remainder of the air required for combustion. Sight and lighting port (not shown) provides access to the interior of burner plenum 148 for lighting element (not shown).

Unmixed low temperature ambient air, having entered secondary air chamber 132 through dampers 134 is drawn from secondary air chamber 132 through orifice 162, through at least one bleed air duct 164, through orifice 160 into flue gas recirculation passageway 176 into the primary air chamber 126 by the inspirating effect of the fuel passing through venturi portion 119. Again, the ambient air may be fresh air as discussed above. Each bleed air duct 164 has a first end 166 and a second end 168, first end 166 connected to orifice 160 of flue gas recirculation passageway 176 and second end 168 connected to orifice 162 and in fluid communication with secondary air chamber 132. As is preferred, furnace floor 114 comprises a high temperature, low, thermal conductivity material and includes at least a portion of air bleed duct 164 formed furnace floor 114 to minimize the temperature of the flue gas recirculation passageway 176.

Once again, it is desirable that a mixture of 20 to 80% flue gas and from 20 to 80% ambient air be drawn through flue gas recirculation passageway 176. It is particularly preferred that a mixture of 50% flue gas and 50% ambient air be employed. The desired proportions of flue gas and ambient air may be achieved by proper sizing and placement of orifice 160. As indicated above, a plurality of bleed air ducts 164 may be employed to obtain the desired percentages of flue gas and ambient air.

As with previous embodiments, the desired proportions of flue gas and ambient air may be achieved by the proper sizing, placement and/or design of pipe 176, bleed air duct 164, as described above.

As may be appreciated, a feature of the burner of the present invention is that the flue-gas recirculated to the burner is mixed with a portion of the cool secondary air prior to entering the FGR duct: This mixing reduces the temperature of the stream flowing in the FGR duct. This feature is particularly important for the burners of high temperature furnaces such as steam crackers or reformers, where the temperature of the flue-gas being recirculated can be as high as 1149 °C (2100 °F). By combining approximately one pound of staged-air with each pound of flue-gas recirculated, the temperature within the FGR duct can be advantageously reduced.

It may be recognized that prior flat flame burner designs have employed the use of one or more holes placed in the metal portion of an FGR duct, below the ceramic furnace floor, in an attempt to reduce the overall temperature of the flue gas. While of some benefit, such a design has only a minimal effect on duct life and temperature reduction, since the cooler secondary air enters the FGR duct after the metal portion has been exposed to hot flue gas before any significant mixing with secondary air can take place. As may be appreciated by those skilled in the art, the flat flame burner design of the present invention overcomes these shortcomings.

Unlike prior designs, one or more passageways connecting the staged-air chamber directly to the flue-gas recirculation duct induce a small quantity of unheated staged-air into the FGR duct to cool the air/flue-gas stream prior to entering the metallic section of the FGR duct. By having the majority of the secondary air supplied directly from the secondary air chamber, rather than having the bulk of the secondary air traverse across the furnace floor prior to entering the FGR duct, beneficial results are obtained, as demonstrated by the Examples below.

Low temperature ambient air enters the secondary air chamber 132 through dampers 134. Again, the ambient air may be fresh air as discussed above. One or more stage air heat exchange tubes 165 may be provided in the flue gas recirculation passageway 176 which allow the low temperature ambient air to exchange heat with the recirculated flue gas. Again, the teachings of the present invention with respect to heat exchange tubes 165 and bleed air duct 164 may be applied separately or in combination with this embodiment.

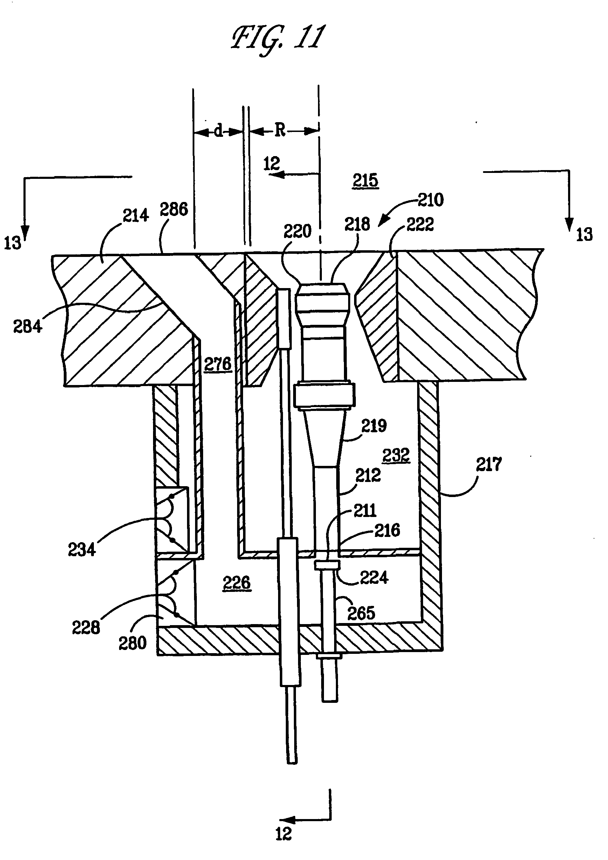

Another aspect of the present invention regarding the use of an angled FGR duct is next discussed. Referring to FIGS. 11-13, a burner 210 includes a freestanding burner tube 212 located in a well in a furnace floor 214. The burner tube 212 includes an upstream end 216, a downstream end 218 and a venturi portion 219. A burner tip 220 is located at the downstream end 218 and is surrounded by an annular tile 222. A fuel orifice 211, which may be located within gas spud 224 is at the top end of a gas fuel riser 265 and is located at the upstream end 216. and introduces fuel into the burner tube 212. Fresh or ambient air is introduced into a primary air chamber 226 through an adjustable damper 228, which is in fluid communication with opening 280, to mix with the fuel at the upstream end 216 of the burner tube 212 and pass upwardly through the venturi portion 219. Combustion of the fuel occurs downstream of the burner tip 220.

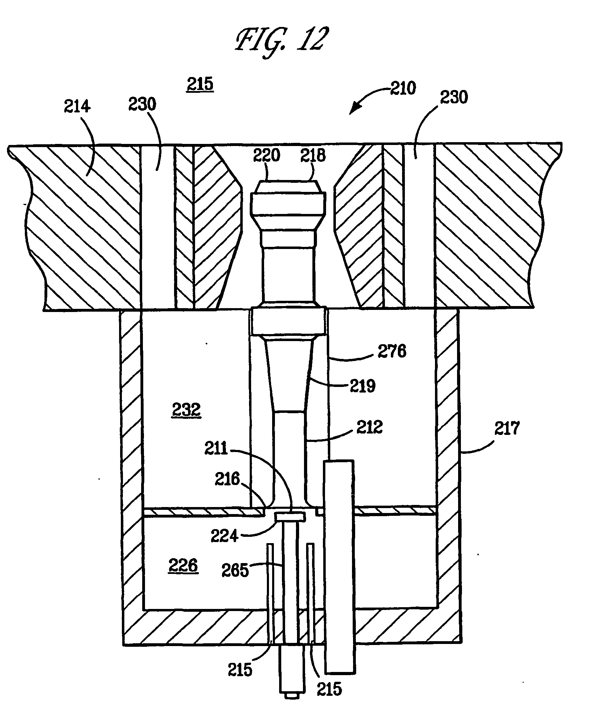

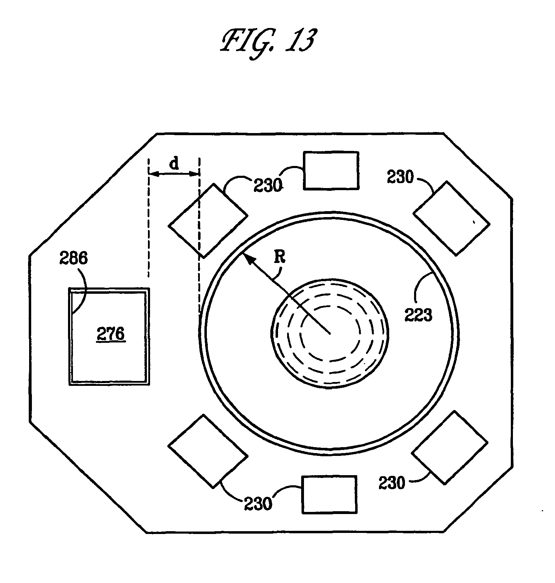

A plurality of air ports 230 (FIGS. 12 and 13) originate in a secondary air chamber 232 and pass through the furnace floor 214 into the furnace. Fresh or ambient air enters the secondary air chamber 232 through adjustable dampers 234 and passes through the staged air ports 230 into the furnace to provide secondary or staged combustion.

Unmixed low temperature fresh or ambient air, having entered the secondary air chamber 232 through the dampers 234, and having passed through the air ports 230 into the furnace, is also drawn through a flue gas recirculation (FGR) duct 276 into a primary air chamber 226 by the inspirating effect of the fuel passing through the venturi portion 219. The duct 276 is shown as a metallic FGR duct.

As shown in FIG. 11, an aspect of the instant invention angles the FGR duct 276 outwardly at 284 such that the opening 286 of the duct 276 is physically further spaced away from the base of the burner tip 220. The angled FGR duct inlet 284 thus avoids or at least reduces the potential for the burner flame to be entrained into the FGR duct 276. This embodiment enables higher flue gas recirculation (FGR) rates to be induced into the burner 210. Such higher FGR rates, in turn, reduce overall flame temperature and $NO_x$ production.

With reference to FIG. 13 a flame opening 223 is circular and has a radius R, and the distance (d) that the duct opening 286 is laterally spaced from the flame opening 223 is defined by $d \geq 0.5R$ for avoiding entrainment of the flame into the duct opening 286.

The angle outward at 284 also permits the continued use of the relatively small burner box 217. It should be noted that such FGR burners might be on the order of 1.8 m (6 ft) in height by 0.9 m (3 ft) in width.

In addition to the use of flue gas as a diluent, another technique to achieve lower flame temperature through dilution is through the use of steam injection. This is accomplished through steam injection tubes 215, which may or may not be present. Steam can be injected in the primary air or the secondary air chamber. Preferably, steam may be injected upstream of the venturi portion 219.

Flue gas containing, for example, 0 to 15% 02 is drawn from near the furnace floor through the duct 276 with 5 to 15% 02 preferred, 2 to 10% 02 more preferred and 2 to 5% 02 particularly preferred, by the inspirating effect of fuel passing through venturi portion 219 of burner tube 212. In this manner, the primary air and flue gas are mixed in primary air chamber 226, which is prior to the zone of combustion. Therefore, the amount of inert material mixed with the fuel is raised, thereby reducing the flame temperature and, as a result, reducing $NO_x$ emissions.

Closing or partially closing damper 228 restricts the amount of fresh air that can be drawn into the primary air chamber 226 and thereby provides the vacuum necessary to draw flue gas from the furnace floor.

Advantageously, a mixture of from 20% to 80% flue gas and from 20% to 80% ambient air should be drawn through duct 276. It is particularly preferred that a mixture of 50% flue gas and 50% ambient air be employed. The desired proportions of flue gas and ambient air may be achieved by proper placement and/or design of the duct 276 in relation to the air ports 230. That is, the geometry of the air ports, including but not limited to their distance from the burner tube, the number of air ports, and the size of the air ports, may be varied to obtain the desired percentages of flue gas and ambient air.

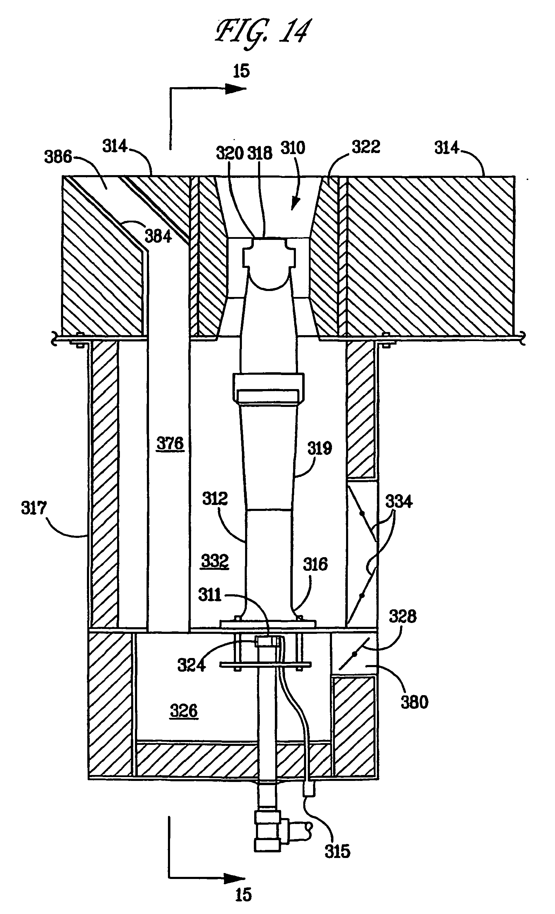

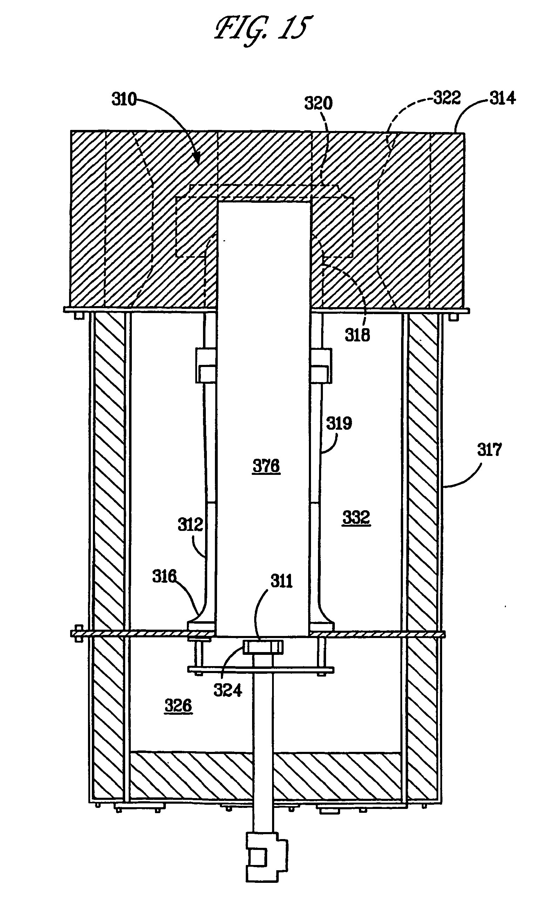

Benefits similar to those described above obtained using the angled FGR aspect of the present invention can be achieved in flat-flame burners, as will now be described by reference to FIGS. 14 and 15.

A burner 310 includes a freestanding burner tube 312 located in a well in a furnace floor 314. Burner tube 312 includes an upstream end 316, a downstream end 318 and a venturi portion 319. Burner tip 320 is located at downstream end 318 and is surrounded by a peripheral tile 322. A fuel orifice 311, which may be located within gas spud 324 is located at upstream end 316 and introduces fuel into burner tube 312. Fresh or ambient air may be introduced into primary air chamber 326 to mix with the fuel at upstream end 316 of burner tube 312. Combustion of the fuel occurs downstream of burner tip 320. Fresh secondary air enters secondary chamber 332 through dampers 334.

In order to recirculate flue gas from the furnace to the primary air chamber, a flue gas recirculation passageway 376 is formed in furnace floor 314 and extends to primary air chamber 326, so that flue gas is mixed with fresh air drawn into the primary air chamber from opening 380. Flue gas containing, for example, 0 to 15% $O_2$ is drawn through pas-

sageway 376 by the inspirating effect of fuel passing through venturi portion 319 of burner tube 312. Primary air and flue gas are mixed in primary air chamber 326, which is prior to the zone of combustion.

In operation, fuel orifice 311 discharges fuel into burner tube 312, where it mixes with primary air, recirculated flue-gas or mixtures thereof. The mixture of fuel and recirculated flue-gas, primary air or mixtures thereof then discharges from burner tip 320. The mixture in the venturi portion 319 of burner tube 312 is maintained below the fuel-rich flammability limit; i.e. there is insufficient air in the venturi to support combustion. Secondary air is added to provide the remainder of the air required for combustion.

As with the previous embodiment, the FGR duct 376 is angled outwardly at 384 such that the opening 386 of the duct 376 is physically further spaced away from the base of the burner tip 320. The angled FGR duct inlet 384 thus avoids or at least reduces the potential for the burner flame to be entrained into the FGR duct 376. This enables higher flue gas recirculation (FGR) rates to be induced into the burner 310. Such higher FGR rates, in turn, reduce overall flame temperature and $NO_x$ production.

The angle outward at 384 also permits the continued use of the relatively small burner box 317. It should be noted that such FGR burners might be in the order of 1.8 m (6 ft) in height by 0.9 m (3 ft) in width.

Optionally, one or more steam injection tubes 315 may be provided and positioned in the direction of flow to add to the motive force.

Examples

To assess the benefits of the bleed air duct aspects of the present invention, an energy and material balance was performed for each of the configurations described below.

Example 1

In order to demonstrate the benefits of the present invention, the operation of a pre-mix burner employing flue gas recirculation of the type described in U.S. Patent 5,092,761 (as depicted in FIG. 5 of U.S. Patent 5,092,761), was calculated using data from existing burner designs to set the energy and material balance. Results of the detailed material and energy balance are illustrated in Table 1 for the baseline burner of Example 1.

Example 2

In Example 2, the same material balance is maintained as in the existing burner. As indicated in Table 1, the calculated material and energy balance indicated that the venturi temperature was reduced by over 38°C (100°F) and the FGR duct temperature was reduced by almost 113°C (300°F). Note that the momentum ratio of the venturi (momentum of fuel jet in: momentum of air/fuel/flue-gas stream after mixing) is reduced, indicating that the load on the venturi mixer has been reduced. A lower venturi momentum ratio translates into a venturi having a higher capacity, which yields higher FGR rates.

Table 1

| Case | Example1 | Example 2 |
|---|---|---|
| FGR Ratio* Mass ratio air: flue-gas | 8.5% | 8.5% |
| in FGR duct Temp of air entering | 1.0 | 1.0 |
| FGR duct | 371°C (700°F) | 15.6°C (60°F) |
| Temperature in FGR duct | 738°C (1361°F) | 578°C (1073°F) |
| $O_2$ in FGR duct (dry vol. %) | 12.4 | 12.4 |
| Mass ratio Primary air: Total FGR duct flow | 0.5 | 0.5 |
| Temperature in Venturi | 334°C (633°F) | 263°C (506°F) |
| $O_2$ in Venturi (dry vol. %) | 10.8 | 10.8 |
| Venturi momentum ratio: | 0.81 | 0.72 |

*FGR Ratio (pct.) = 100 x mass flow of flue-gas recycled / (fuel mass flow + combustion air mass flow)

As may be appreciated by those skilled in the art, the present invention can be incorporated in new burners or can be retrofitted into existing burners by alterations to the burner surround.

In addition to the use of flue gas as a diluent, another technique to achieve lower flame temperature through

dilution is through the use of steam injection. Steam can be injected in the primary air or the secondary air chamber. Preferably, steam may be injected upstream of the venturi. Steam injection may occur through, for example, steam injection tube 315. Preferably, steam may be injected upstream of the venturi.

It will also be understood that the teachings described herein also have utility. in traditional raw gas burners and raw gas burners having a pre-mix burner configuration wherein flue gas alone is mixed with fuel gas at the entrance to the burner tube. In fact, it has been found that the pre-mix, staged-air burners of the type described in detail herein can be operated with the primary air damper doors closed with very satisfactory results.

**Claims**

1. A burner (10, 110, 210, 310) for the combustion of fuel in a furnace, said burner (10, 110, 210, 310) comprising:

   (a) a primary air chamber (26, 126, 226, 326);
   (b) a burner tube (12, 112, 212, 312) having a downstream end (18, 118, 218, 318), and having an upstream end (16, 116, 216, 316) for receiving air and fuel;
   (c) a burner tip (20, 120, 220, 320) being mounted on the downstream end (18, 118, 218, 318) of said burner tube (12, 112, 212, 312) adjacent to a first flame opening in the furnace, so that combustion of the fuel takes place downstream of said burner tip (20, 120, 220, 320);
   (d) at least one passageway (36, 76, 176, 276, 376) having a first end at a second opening in the furnace and a second end adjacent the upstream end (16, 116, 216, 316) of said burner tube (12, 112, 212, 312), said passageway (36, 76, 176, 276, 376) having an orifice (60, 160), said first end being spaced an effective distance from said first opening for minimizing entrainment of a burner flame into said second opening; and **characterised by** also comprising:
   (e) at least one bleed air duct (64, 164) having a first end (66, 166) and a second end (68, 168), said first end (66, 166) in fluid communication with said orifice (60, 160) of said at least one passageway (36, 76, 176, 276, 376) and said second end (68, 168) in fluid communication with a source of air which is cooler than the flue gas; and
   (f) means for drawing flue gas from said furnace through said at least one passageway (36, 76, 176, 276, 376) and air from said source of air from said at least one bleed air duct (64, 164) through said at least one passageway (36, 76, 176, 276, 376) in response to an inspirating effect created by uncombusted fuel, flowing through said burner tube (12, 112, 212, 312) from its upstream end (16, 116, 216, 316) towards its downstream end (18, 118, 218, 318), whereby the flue gas is mixed with
   air from said at least one air bleed duct (64, 164) prior to the zone of combustion of the fuel and air to thereby lower the temperature of the drawn flue gas.

2. The burner (10, 110, 210, 310) according to claim 1, wherein said means for drawing flue gas from said furnace comprises a venturi portion (19, 119. 219. 319) in said burner tube (12, 112, 212, 312).

3. The burner (10, 110, 210, 310) according to claim 1 or claim 2, wherein said at least one air bleed duct (64, 164) is sized to permit the flow of all primary air required by said burner (10, 110, 210, 310).

4. The burner (10, 110, 210. 310) according to any preceding claim, wherein the interior of said at least one passageway (36, 76. 176. 276. 376) comprises a metal portion extending into and meeting with a non-metal portion and wherein said first end of said at least one bleed air duct (64, 164) is in fluid communication with the metal portion of said at least one passageway (36, 76, 176, 276, 376).

5. The burner (10, 110, 210, 310) according to any one of claims 1 to 3, wherein the interior of said at least one passageway (36, 76, 176, 276, 376) comprises a metal portion extending Into and meeting with a non-metal portion and wherein said first end of said at least one bleed air duct (64, 164) is in fluid communication with the non-meta! portion of said at least one passageway (36, 76, 176, 276, 376).

6. The burner (10, 110, 210. 310) according to any preceding claim, further comprising a secondary air chamber (32, 132, 232, 332), wherein said first end of said at least one passageway (36, 76, 176, 276, 376) is in fluid communication with said secondary air chamber (32, 132, 232, 332).

7. The burner (10, 210) according to any one of claims 1 to 5, further comprising a secondary air chamber (32, 232) and at least one air port (30, 230), wherein said first end of said at least one passageway (36, 76, 276) is in fluid communication with said at least one air port (30, 230), said at least one air port (30, 230) having a first end at a third opening in said furnace and a second end in fluid communication with said secondary air chamber (32, 232).

8. The burner (10, 110, 210, 310) according to any preceding claim, wherein said at least one passageway (36, 76, 176, 276, 376) comprises a duct having a first end and a second end, said first end extending into a second opening in the furnace, and said second end extending into said primary air chamber(28, 128, 228, 328).

9. The burner (10, 110, 210, 310) according to any preceding claim, further comprising at least one adjustable (28, 128, 228, 328) damper opening into said primary air chamber (28, 128, 228, 328) to restrict the amount of air entering into said primary air chamber (28, 128, 228, 328), thereby providing a vacuum to draw flue gas from the furnace.

10. The burner (10, 110, 210, 310) according to any preceding claim, wherein said first flame opening is circular and has a radius R, and wherein said distance d that said second opening is laterally spaced from said first flame opening is ≥ 0.5R for substantially avoiding entrainment of the burner flame into said second opening.

11. The burner (10, 110, 210, 310) according to any preceding claim wherein said at least one passageway (276, 376) extends vertically from said primary air chamber (28, 128, 228, 328) and is angled outwardly from said first flame opening at said first end to join with said second opening that is laterally spaced from said first flame opening.

12. The burner (10, 110, 210, 310) according to any preceding claim further comprising at least one tube (65, 165) disposed in said at least one. passageway (36, 76, 176, 276, 376) whereby air which is cooler than the flue gas flows through said tube (65, 165) into a secondary air chamber (32, 132, 232, 332) permitting heat to be transferrer from said flue gas to the air to preheat the air.

13. The burner (10, 110, 210, 310) according to claim 12 further comprising at least one second passageway (36, 76, 176, 278, 376) having a first end at a third opening in said furnace and a second end in said secondary air chamber (32, 132, 232, 332) and in fluid communication with saki furnace permitting the preheated air to enter said furnace.

14. The burner (10, 110, 210, 310) according to claim 13, wherein said means for drawing flue gas from said furnace comprises a venturi portion (19, 119, 219, 319) in said burner tube (12, 112, 212, 312).

15. The burner (10, 110, 210, 310) according to any preceding claim further comprising at least one steam injection tube (15, 184, 215, 315).

16. The burner (10, 110, 210, 310) according to any preceding claim wherein the fuel is fuel gas and the burner is a premix burner (10, 110, 210, 310).

17. The burner (110, 310) according to any preceding claim, wherein the fuel is fuel gas and the burner (110, 310) is a flat-flame burner (110, 310).

**Patentansprüche**

1. Brenner (10, 110, 210, 310) zur Verbrennung von Brennstoff in einem Feuerraum, wobei der Brenner (10, 110, 210, 310) aufweist:

    (a) eine Primärluftkammer (26, 126, 226, 326);
    (b) ein Brennerrohr (12, 112, 212, 312), das ein stromabwärts gelegenes Ende (18, 118, 218, 318) aufweist und das ein stromaufwärts gelegenes Ende (16, 116, 216, 316) zum Empfangen von Luft und Brennstoff aufweist,
    (c) ein Brennermundstück (20, 120, 220, 320), das an dem stromabwärts gelegenen Ende (18, 118, 218, 318) des Brennerrohrs (12, 112, 212, 312) benachbart zu einer ersten Flammenöffnung in dem Feuerraum montiert ist, so dass eine Verbrennung des Brennstoffs stromabwärts von dem Brennermundstück (20, 120, 220, 320) stattfindet,
    (d) mindestens einen Durchgang (36, 76, 176, 276, 376) mit einem ersten Ende an einer zweiten Öffnung in dem Feuerraum und einem zweiten Ende benachbart zu dem stromaufwärts gelegenen Ende (16, 116, 216, 316) des Brennerrohrs (12, 112, 212, 312), wobei der Durchgang (36, 76, 176, 276, 376) eine Öffnung (60, 160) aufweist, wobei des erste Ende um einen wirksamen Abstand von der ersten Öffnung beabstandet ist, um ein Mitreißen einer Brennerflamme in die zweite Öffnung zu minimieren, und **dadurch gekennzeichnet, dass** er auch aufweist:

(e) mindestens einen Zapfluftkanal (64, 164), der ein erstes Ende (66, 166) und eine zweites Ende (68, 168) hat, wobei sich das erste Ende (66, 166) in Fluidverbindung mit der Öffnung (60, 160) des mindestens einen Durchgangs (36, 76, 176, 276, 376) und das zweite Ende (68, 168) in Fluidverbindung mit einer Quelle für Luft befindet, die kälter als das Abgas ist, und

(f) eine Einrichtung zum Ziehen von Abgas aus dem Feuerraum durch den mindestens einen Durchgang (36, 76, 176, 276, 376) und von Luft von der Quelle für Luft aus dem mindestens einen Zapfluftkanal (64, 164) durch den mindestens einen Durchgang (36, 76, 176, 276, 376) in Reaktion auf einen Inspirationseffekt, der durch nicht verbrannten Brennstoff erzeugt wird, der durch das Brennerrohr (12, 112, 212, 312) von dessen stromaufwärts gelegenem Ende (16, 116, 216, 316) in Richtung auf dessen stromabwärts gelegenes Ende (18, 118, 218, 318) strömt, wodurch das Abgas vor der Zone der Verbrennung von Brennstoff und Luft mit Luft von dem mindestens einen Zapfluftkanal (64, 164) gemischt wird, um auf diese Weise die Temperatur des gezogenen Abgases zu verringern.

2. Brenner (10, 110, 210, 310) nach Anspruch 1, bei dem die Einrichtung zum Ziehen von Abgas aus dem Feuerraum einen Venturiabschnitt (19, 119, 219, 319) in dem Brennerrohr (12, 112, 212, 312) aufweist.

3. Brenner (10, 110, 210, 310) nach Anspruch 1 oder Anspruch 2, bei dem der mindestens eine Zapfluftkanal (64, 164) dimensioniert ist, um die Strömung der gesamten Primärluft zu ermöglichen, die von dem Brenner (10, 110, 210, 310) benötigt wird.

4. Brenner (10, 110, 210, 310) nach einem der vorhergehenden Ansprüche, bei dem das Innere des mindestens einen Durchgangs (36, 76, 176, 276, 376) einen Metallabschnitt aufweist, der sich in einen Nichtmetallabschnitt erstreckt und mit diesem zusammentrifft, und bei dem sich das erste Ende des mindestens einen Zapfluftkanals (64, 164) in Fluidverbindung mit dem Metallabschnitt des mindestens einen Durchgangs (36, 76, 176, 276, 376) befindet.

5. Brenner (10, 110, 210, 310) nach einem der Ansprüche 1 bis 3, bei dem das Innere des mindestens einen Durchgangs (36, 76, 176, 276, 376) einen Metallabschnitt aufweist, der sich in einen Nichtmetallabschnitt erstreckt und mit diesem zusammentrifft, und bei dem sich das erste Ende des mindestens einen Zapfluftkanals (64, 164) in Fluidverbindung mit dem Nichtmetallabschnitt des mindestens einen Durchgangs (36, 76, 176, 276, 376) befindet.

6. Brenner (10, 110, 210, 310) nach einem der vorhergehenden Ansprüche, der ferner eine Sekundärluftkammer (32, 132, 232, 332) aufweist, wobei sich das erste Ende des mindestens einen Durchgangs (36, 76, 176, 276, 376) in Fluidverbindung mit der Sekundärluftkammer (32, 132, 232, 332) befindet.

7. Brenner (10, 210) nach einem der Ansprüche 1 bis 5, der ferner eine Sekundärluftkammer (32, 232) und mindestens einen Luftkanal (30, 230) aufweist, wobei sich das erste Ende des mindestens einen Durchgangs (36, 76, 276) in Fluidverbindung mit dem mindestens einen Luftkanal (30, 230) befindet, wobei der mindestens eine Luftkanal (30, 230) ein erstes Ende bei einer dritten Öffnung in dem Feuerraum und ein zweites Ende in Fluidverbindung mit der Sekundärluftkammer (32, 232) aufweist.

8. Brenner (10, 110, 210, 310) nach einem der vorhergehenden Ansprüche, bei dem der mindestens eine Durchgang (36, 76, 176, 276, 376) einen Kanal mit einem ersten Ende und einem zweiten Ende aufweist, wobei sich das erste Ende in eine zweite Öffnung in dem Feuerraum erstreckt und sich das zweite Ende in die Primärluftkammer (28, 128, 228, 328) erstreckt.

9. Brenner (10, 110, 210, 310) nach einem der vorhergehenden Ansprüche, der ferner mindestens eine einstellbare (28, 128, 228, 328) Drosseleinrichtung aufweist, die sich in die Primärluftkammer (28, 128, 228, 328) öffnet, um die Luftmenge zu begrenzen, die in die Primärluftkammer (28, 128, 228, 328) eintritt, und dadurch einen Unterdruck bereitzustellen, um Abgas aus dem Feuerraum zu ziehen.

10. Brenner (10, 110, 210, 310) nach einem der vorhergehenden Ansprüche, bei dem die erste Flammenöffnung kreisförmig ist und einen Radius R hat und bei dem der Abstand d, um den die zweite Öffnung seitlich von der ersten Flammenöffnung beabstandet ist, $\geq 0,5$ R ist, um ein Mitreißen der Brennerflamme in die zweite Öffnung im Wesentlichen zu vermeiden.

11. Brenner (10, 110, 210, 310) nach einem der vorhergehenden Ansprüche, bei dem sich der mindestens eine Durchgang (276, 376) vertikal von der Primärluftkammer (28, 128, 228, 328) erstreckt und an dem ersten Ende von der ersten Flammenöffnung nach außen abgewinkelt ist, um mit der zweiten Öffnung verbunden zu sein, die seitlich von der ersten Flammenöffnung beabstandet ist.

12. Brenner (10, 110, 210, 310) nach einem der vorhergehenden Ansprüche, der ferner mindestens ein Rohr (65, 165) aufweist, das in dem mindestens einen Durchgang (36, 76, 176, 276, 376) angeordnet ist, wobei Luft, die kälter als das Abgas ist, durch das Rohr (65, 165) in die Sekundärluftkammer (32, 132, 232, 332) strömt, was es ermöglicht, dass Wärme von dem Abgas auf die Luft übertragen wird, um die Luft vorzuwärmen.

13. Brenner (10, 110, 210, 310) nach Anspruch 12, der ferner mindestens einen zweiten Durchgang (36, 76, 176, 276, 376) aufweist, der ein erstes Ende bei einer dritten Öffnung in dem Feuerraum und ein zweites Ende in der Sekundärluftkammer (32, 132, 232, 332) und in Fluidverbindung mit dem Feuerraum hat, was es ermöglicht, dass die vorgewärmte Luft in den Feuerraum eintritt.

14. Brenner (10, 110, 210, 310) nach Anspruch 13, bei dem die Einrichtung zum Ziehen von Abgas aus dem Feuerraum einen Venturiabschnitt (19, 119, 219, 319) in dem Brennerrohr (12, 112, 212, 312) aufweist.

15. Brenner (10, 110, 210, 310) nach einem der vorhergehenden Ansprüche, der ferner mindestens ein Dampfeinspeiserohr (15, 184, 215, 315) aufweist.

16. Brenner (10, 110, 210, 310) nach einem der vorhergehenden Ansprüche, bei dem der Brennstoff Brenngas ist und der Brenner ein Treibdüsenbrenner (10, 110, 210, 310) ist.

17. Brenner (110, 310) nach einem der vorhergehenden Ansprüche, bei dem der Brennstoff Brenngas ist und der Brenner (110, 310) ein Breitbrenner (110, 310) ist.

**Revendications**

1. Brûleur (10, 110, 210, 310) pour la combustion de combustible dans un four, ledit brûleur (10, 110, 210, 310) comprenant :

   (a) une chambre d'air primaire (26, 126, 226, 326) ;
   (b) un tube de brûleur (12, 112, 212, 312) comportant une extrémité aval (18, 118, 218, 318), et comportant une extrémité amont (16, 116, 216, 316) permettant de recevoir l'air et le combustible ;
   (c) un bec de brûleur (20, 120, 220, 320) monté sur l'extrémité aval (18, 118, 218, 318) dudit tube de brûleur (12, 112, 212, 312) en position adjacente à une première ouverture à la flamme dans le four, de telle sorte que la combustion du combustible se fasse en aval dudit bec de brûleur (20, 120, 220, 320) ;
   (d) au moins un passage (36, 76, 176, 276, 376) comportant une première extrémité au niveau d'une deuxième ouverture dans le four et une deuxième extrémité adjacente à l'extrémité amont (16, 116, 216, 316) dudit tube de brûleur (12, 112, 212, 312), ledit passage (36, 76, 176, 276, 376) comportant un orifice (60, 160), ladite première extrémité étant placée à une distance efficace de ladite première ouverture pour minimiser l'entraînement de la flamme du brûleur dans ladite deuxième ouverture ; et **caractérisé en ce qu'**il comprend en outre :
   (e) au moins un conduit d'air de purge (64, 164) comportant une première extrémité (66, 166) et une deuxième extrémité (68, 168), ladite première extrémité (66, 166) en communication fluide avec ledit orifice (60, 160) du ou desdits passages (36, 76, 176, 276, 376) et ladite deuxième extrémité (68, 168) en communication fluide avec une source d'air qui est plus froide que le gaz de carneau ; et
   (f) un moyen permettant d'aspirer le gaz de carneau depuis ledit four à travers le ou lesdits passages (36, 76, 176, 276, 376) et l'air provenant de ladite source d'air depuis le ou lesdits conduits d'air de purge (64, 164) à travers le ou lesdits passages (36, 76, 176, 276, 376) en réponse à un effet d'inspiration créé par le combustible non brûlé, circulant dans ledit tube de brûleur (12, 112, 212, 312) depuis son extrémité amont (16, 116, 216, 316) en direction de son extrémité aval (18, 118, 218, 318), moyennant quoi le gaz de carneau est mélangé avec l'air provenant du ou desdits conduits de purge d'air (64, 164) avant la zone de combustion du combustible et de l'air afin d'abaisser la température du gaz de carneau aspiré.

2. Brûleur (10, 110, 210, 310) selon la revendication 1, dans lequel ledit moyen permettant d'aspirer le gaz de carneau depuis ledit four comprend un tronçon à effet venturi (19, 119, 219, 319) dans ledit tube de brûleur (12, 112, 212, 312).

3. Brûleur (10, 110, 210, 310) selon la revendication 1 ou la revendication 2, dans lequel le ou lesdits conduits de purge d'air (64, 164) sont dimensionnés de façon à permettre l'écoulement de tout l'air primaire requis par ledit brûleur (10, 110, 210, 310).

4. Brûleur (10, 110, 210, 310) selon l'une quelconque des revendications précédentes, dans lequel l'intérieur du ou desdits passages (36, 76, 176, 276, 376) comprend un tronçon métallique se prolongeant dans et rencontrant un tronçon non métallique et dans lequel ladite première extrémité du ou desdits conduits d'air de purge (64, 164) est en communication fluide avec le tronçon métallique du ou desdits passages (36, 76, 176, 276, 376).

5. Brûleur (10, 110, 210, 310) selon l'une quelconque des revendications 1 à 3, dans lequel l'intérieur du ou desdits passages (36, 76, 176, 276, 376) comprend un tronçon métallique se prolongeant dans et rencontrant un tronçon non métallique et dans lequel ladite première extrémité du ou desdits conduits d'air de purge (64, 164) est en communication fluide avec le tronçon non métallique du ou desdits passages (36, 76, 176, 276, 376).

6. Brûleur (10, 110, 210, 310) selon l'une quelconque des revendications précédentes, comprenant en outre une chambre d'air secondaire (32, 132, 232, 332), dans lequel ladite première extrémité du ou desdits passages (36, 76, 176, 276, 376) est en communication fluide avec ladite chambre d'air secondaire (32, 132, 232, 332).

7. Brûleur (10, 210) selon l'une quelconque des revendications 1 à 5, comprenant en outre une chambre d'air secondaire (32, 232) et au moins une prise d'air (30, 230), dans lequel ladite première extrémité du ou desdits passages (36, 76, 276) est en communication fluide avec la ou lesdits prises d'air (30, 230), la ou lesdits prises d'air (30, 230) comportant une première extrémité au niveau d'une troisième ouverture dans ledit four et une deuxième extrémité en communication fluide avec ladite chambre d'air secondaire (32, 232).

8. Brûleur (10, 110, 210, 310) selon l'une quelconque des revendications précédentes, dans lequel le ou lesdits passages (36, 76, 176, 276, 376) comprennent un conduit comportant une première extrémité et une deuxième extrémité, ladite première extrémité se prolongeant dans une deuxième ouverture dans le four, et ladite deuxième extrémité se prolongeant dans ladite chambre d'air primaire (28, 128, 228, 328).

9. Brûleur (10, 110, 210, 310) selon l'une quelconque des revendications précédentes, comprenant en outre au moins un modérateur ajustable (28, 128, 228, 328) débouchant dans ladite chambre d'air primaire (28, 128, 228, 328) pour restreindre la quantité d'air pénétrant dans ladite chambre d'air primaire (28, 128, 228, 328), créant ainsi un vide permettant d'aspirer le gaz de carneau depuis le four.

10. Brûleur (10, 110, 210, 310) selon l'une quelconque des revendications précédentes, dans lequel ladite première ouverture à la flamme est circulaire et possède un rayon R, et dans lequel ladite distance d existant latéralement entre ladite deuxième ouverture et ladite première ouverture à la flamme est ≥ 0,5R afin d'éviter essentiellement l'entraînement de la flamme du brûleur dans ladite deuxième ouverture.

11. Brûleur (10, 110, 210, 310) selon l'une quelconque des revendications précédentes dans lequel le ou lesdits passages (276, 376) se prolongent verticalement depuis ladite chambre d'air primaire (28, 128, 228, 328) et s'écartent d'un certain angle de ladite première ouverture à la flamme au niveau de ladite première extrémité pour rejoindre ladite deuxième ouverture qui est distante latéralement de ladite première ouverture à la flamme,

12. Brûleur (10, 110, 210, 310) selon l'une quelconque des revendications précédentes comprenant en outre au moins un tube (65, 165) placé dans le ou lesdits passages (36, 76, 176, 276, 376) moyennant quoi l'air qui est plus froid que le gaz de carneau s'écoule dans ledit tube (65, 165) pour arriver dans une chambre d'air secondaire (32, 132, 232, 332) permettant à la chaleur d'être transférée depuis ledit gaz de carneau à l'air pour préchauffer l'air.

13. Brûleur (10, 110, 210, 310) selon la revendication 12 comprenant en outre au moins un deuxième passage (36, 76, 176, 276, 376) comportant une première extrémité au niveau d'une troisième ouverture dans ledit four et une deuxième extrémité dans ladite chambre d'air secondaire (32, 132, 232, 332) et en communication fluide avec ledit four permettant à l'air préchauffé de pénétrer dans ledit four.

14. Brûleur (10, 110, 210, 310) selon la revendication 13, dans lequel ledit moyen permettant d'aspirer le gaz de carneau depuis ledit four comprend un tronçon à effet venturi (19, 119, 219, 319) dans ledit tube de brûleur (12, 112, 212, 312).

15. Brûleur (10, 110, 210, 310) selon l'une quelconque des revendications précédentes comprenant en outre au moins un tube d'injection de vapeur d'eau (15, 184, 215, 315).

16. Brûleur (10, 110, 210, 310) selon l'une quelconque des revendications précédentes dans lequel le combustible est un gaz combustible et le brûleur est un brûleur de mélange préalable (10, 110, 210, 310).

17. Brûleur (110, 310) selon l'une quelconque des revendications précédentes, dans lequel le combustible est un gaz combustible et le brûleur (110, 310) est un brûleur à flamme plate (110, 310).

# FIG. 1

FIG. 2

*FIG. 3*

*FIG. 4*

## FIG. 5

# FIG. 6

FIG. 7

# FIG. 8

## FIG. 9

EP 1 488 170 B1

## FIG. 10

24

EP 1 488 170 B1

*FIG. 11*

25

# FIG. 12

FIG. 13

## FIG. 14

## FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4257763 A
- US 5092761 A

- US 4130388 A